# EUROPEAN PATENT APPLICATION

(11) **EP 4 568 006 A1**
(43) Date of publication of application: **11.06.2025**
(21) Application number: 24184011.5
(22) Date of filing: 24.06.2024
(51) Int. Cl.: H01M 50/578

(54) **BATTERY MODULE**

(30) Priority: 05.12.2023 KR 20230174431
(71) Applicant: SAMSUNG SDI CO., LTD., Giheung-gu Yongin-si, Gyeonggi-do 17084 (KR)
(72) Inventor: Cho, Man Sik, 16678 Suwon-si, Gyeonggi-do (KR)
(74) Representative: Gulde & Partner

(57) **Abstract**

Disclosed herein is a battery module, and is directed to providing a battery module capable of safely accommodating a case by providing expandability to a housing. To this end, the present disclosure provides a battery module including a case in which one or more electrode assemblies each including a positive electrode and a negative electrode are embedded, a cap cover configured to cover an open region of the case, a terminal assembled to the cap cover through the cap cover and connected to the electrode assembly, a housing configured to accommodate the cases arranged in a row, and a thickness deformable portion that is formed in the housing and is deformable due to a thickness difference when the case expands.

## Description

### BACKGROUND

### 1. Technical Field

Aspects of embodiments of the present disclosure relates to a battery module.

### 2. Description of the Related Art

Generally, as the demand for portable electronic products such as notebook computers, video cameras, and mobile phones has rapidly increased and the commercialization of robots, electric vehicles, and the like has been accelerated, high-performance secondary batteries allowing repeated charging and discharging have been actively researched.

Secondary batteries are widely used for driving or energy storage not only in small devices such as portable electronic devices but also in medium and large devices such as electric vehicles and energy storage systems (ESS). Particularly, in the case of the medium and large devices, in order to improve the output and/or capacity of the battery, a battery module may be configured in a form in which a plurality of battery cells are electrically connected to each other.

A conventional battery module maintains its durability by applying a certain level of surface pressure to a battery cell through a housing structure installed to surround the battery cell. However, with such a structure, when a swelling phenomenon in which the battery cell expands due to rapid charging, overcharging, over-discharging, short circuit, high-temperature leaving, and the like occurs, a pressure acting between the battery cell and the housing continues to increase, which may accelerate deterioration of the battery cell.

The above-described information disclosed in the technology that forms the background of the present disclosure is provided to improve understanding of the background of the present disclosure, and thus may include information that does not constitute the related art.

### SUMMARY

An aspect of embodiments of the present disclosure is directed to providing a battery module capable of alleviating stress caused by the expansion of a battery cell.

These and other aspects and features of the present disclosure will be described in or will be apparent from the following description of some embodiments of the present disclosure.

A battery module according to a first embodiment of the present invention includes a case in which one or more electrode assemblies each including a positive electrode and a negative electrode are embedded, a cap cover configured to cover an open region of the case, a terminal assembled to the cap cover through the cap cover and connected to the electrode assembly, a housing configured to accommodate the cases arranged in a row, and a thickness deformable portion that is formed in the housing and is deformable due to a thickness difference when the case expands.

The housing may include an end plate configured to support first side surfaces of the cases arranged in a row, and a side plate coupled to the end plate and configured to support second side surfaces of the cases arranged in a row.

The side plate may include a side cover plate configured to cover the second side surfaces of the cases, and a side coupling plate extending from the side cover plate and coupled to the end plate.

A plurality of side cover plates may be arranged to be spaced apart from each other, and the thickness deformable portion may connect the side cover plates spaced apart from each other.

A thickness of the thickness deformable portion may be less than a thickness of the side cover plate.

A battery module according to a second embodiment of the present invention includes a case in which one or more electrode assemblies each including a positive electrode and a negative electrode are embedded, a cap cover configured to cover an open region of the case, a terminal assembled to the cap cover through the cap cover and connected to the electrode assembly, a housing configured to accommodate the cases arranged in a row, and a cut deformable portion that is formed in the housing and is deformable as a part of the housing is cut when the case expands.

The housing may include an end plate configured to support first side surfaces of the cases arranged in a row, and a side plate coupled to the end plate and configured to support second side surfaces of the cases arranged in a row.

The side plate may include a side cover plate configured to cover the second side surfaces of the cases, and a side coupling plate extending from the side cover plate and coupled to the end plate.

The cut deformable portion may include a first cutting line extending upward from a lower end portion of the side coupling plate to cut a part of the side coupling plate, and a second cutting line extending downward from an upper end portion of the side coupling plate to cut a part of the side coupling plate.

A length of each of the first cutting line and the second cutting line may be 20 to 80% of a height of the side coupling plate.

A battery module according to a third embodiment of the present invention includes a case in which one or more electrode assemblies each including a positive electrode and a negative electrode are embedded, a cap cover configured to cover an open region of the case, a terminal assembled to the cap cover through the cap cover and connected to the electrode assembly, and a housing configured to accommodate the cases arranged in a row, wherein at least two of a thickness deformable portion that is formed in the housing and is deformable due to a thickness difference when the case expands, a cut deformable portion that is formed in the housing and is deformable as a part of the housing is cut when the case expands, and a curved deformable portion that is formed in the housing and is deformable due to a curved shape when the case expands are provided.

The housing may include an end plate configured to support first side surfaces of the cases arranged in a row, and a side plate coupled to the end plate and configured to support second side surfaces of the cases arranged in a row.

The side plate may include a side cover plate configured to cover the second side surfaces of the cases, and a side coupling plate extending from the side cover plate and coupled to the end plate.

The curved deformable portion may be formed on the side cover plate.

The battery module may further include a stress distribution portion formed on a part of the curved deformable portion and configured to distribute stress.

The stress distribution portion may include a first hole processed to have a length in a first direction of the curved deformable portion, and a second hole processed at the first hole so as to have a length in a second direction.

The stress distribution portion may include one or more distribution holes processed to be spaced apart from each other in a vertical length direction of the curved deformable portion.

A battery module according to a fourth embodiment of the present invention includes a case in which one or more electrode assemblies each including a positive electrode and a negative electrode are embedded, a cap cover configured to cover an open region of the case, a terminal that passes through the cap cover to be assembled to the cap cover and is connected to the electrode assembly, and a housing configured to accommodate the cases arranged in a row, wherein at least one of the following portions are provided:
a thickness deformable portion that is formed in the housing and is deformable due to a thickness difference when the case expands,
a cut deformable portion that is formed in the housing and is deformable as a part of the housing is cut when the case expands, and
a curved deformable portion that is formed in the housing and is deformable due to a curved shape when the case expands.

A battery module according to a fourth embodiment of the present invention includes a case in which one or more electrode assemblies each including a positive electrode and a negative electrode are embedded, a cap cover configured to cover an open region of the case, a terminal that passes through the cap cover to be assembled to the cap cover and is connected to the electrode assembly, and a housing configured to accommodate the cases arranged in a row, wherein at least two of a thickness deformable portion that is formed in the housing and is deformable due to a thickness difference when the case expands, a cut deformable portion that is formed in the housing and is deformable as a part of the housing is cut when the case expands, and a curved deformable portion that is formed in the housing and is deformable due to a curved shape when the case expands are provided.

The housing may include an end plate configured to support first side surfaces of the cases arranged in a row, and a side plate coupled to the end plate and configured to support second side surfaces of the cases arranged in a row, the side plate may include a side cover plate configured to cover the second side surfaces of the cases, and a side coupling plate extending from the side cover plate and coupled to the end plate, the thickness deformable portion and the curved deformable portion are formed on the side cover plate, and the cut deformable portion is formed on the side coupling plate.

A stress distribution portion formed on a part of the curved deformable portion may distribute stress.

However, the effects obtainable through the present disclosure are not limited to the above effects, and other technical effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a battery module according to a first embodiment of the present invention;
FIG. 2 is a cross-sectional view schematically illustrating the battery module according to the first embodiment of the present invention;
FIG. 3 is a view schematically illustrating a thickness deformable portion according to the first embodiment of the present invention;
FIG. 4 is a perspective view schematically illustrating a battery module according to a second embodiment of the present invention;
FIG. 5 is a view schematically illustrating a cut deformable portion according to the second embodiment of the present invention;
FIG. 6 is a perspective view schematically illustrating a battery module according to a third embodiment of the present invention;
FIG. 7 is a view schematically illustrating a curved deformable portion according to the third embodiment of the present invention;
FIG. 8 is a view illustrating a state in which a stress distribution portion according to a first embodiment is formed in the curved deformable portion of FIG. 7;
FIG. 9 is a view illustrating a state in which a stress distribution portion according to a second embodiment is formed in the curved deformable portion of FIG. 7;
FIG. 10 is a perspective view schematically illustrating a battery module according to a fourth embodiment of the present invention; and
FIG. 11 is a view schematically illustrating a state in which a thickness deformable portion, a cut deformable portion, and a curved deformable portion according to the fourth embodiment of the present invention are simultaneously implemented.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

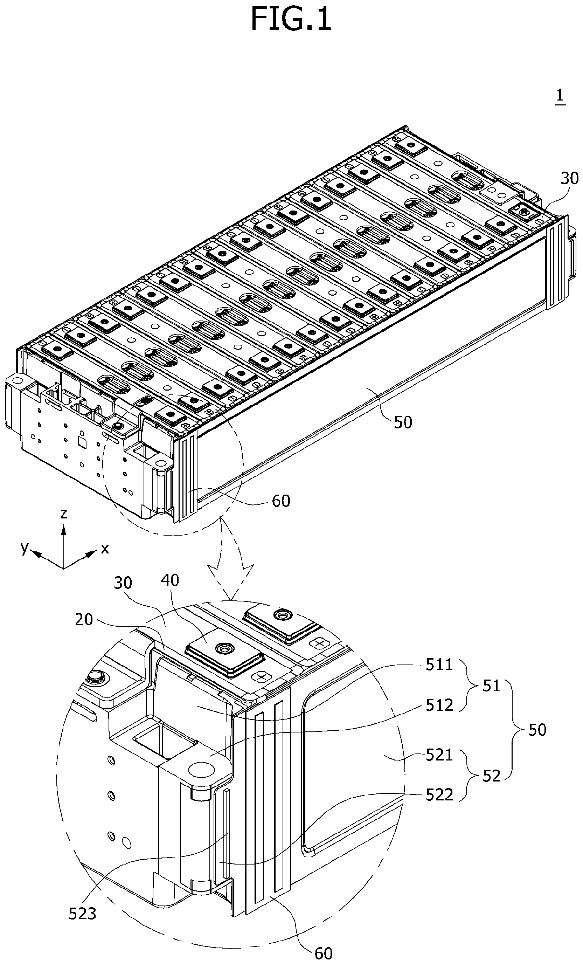

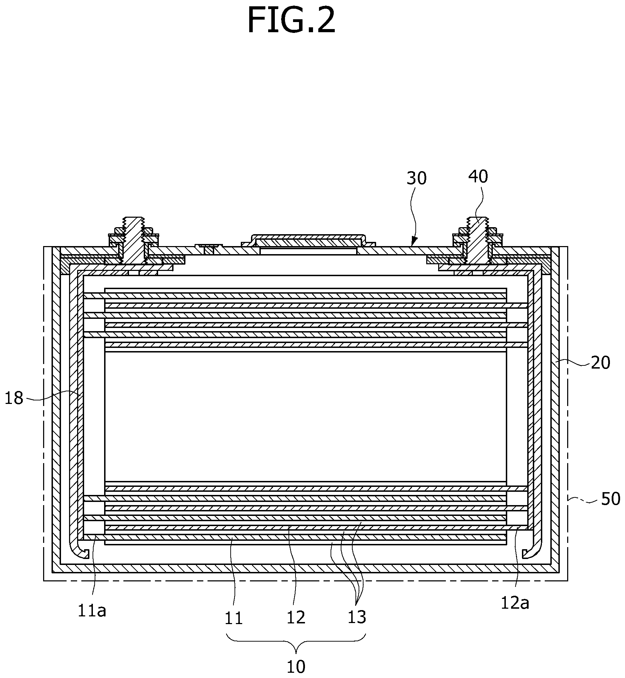

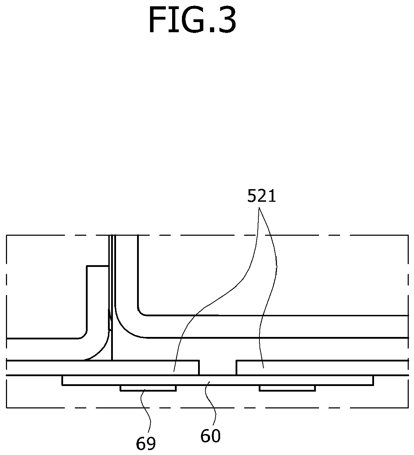

FIG. 1 is a perspective view schematically illustrating a battery module according to a first embodiment of the present invention, FIG. 2 is a cross-sectional view schematically illustrating the battery module according to the first embodiment of the present invention, and FIG. 3 is a view schematically illustrating a thickness deformable portion according to the first embodiment of the present invention. Referring to FIGS. 1 to 3, a battery module 1 according to the first embodiment of the present invention may include a case 20, a cap cover 30, a terminal 40, a housing 50, and a thickness deformable portion 60.

In each of one or more electrode assemblies 10, a separator 13, which is an insulator, may be interposed between a positive electrode 11 and a negative electrode 12, and the positive electrode 11, the separator 13, and the negative electrode 12 may be wound. The positive electrode 11 and the negative electrode 12 may each include a coated portion, which is a region in which an active material is applied to a current collector formed of a thin metal foil, and uncoated portions 11a and 12a, which are regions to which the active material is not applied. The positive electrode 11 and the negative electrode 12 may be wound after interposing the separator 13, which is an insulator, therebetween. However, the present invention is not limited thereto, and the electrode assembly 10 may have a structure in which a positive electrode and a negative electrode, each formed of a plurality of sheets, are alternately stacked, while interposing a separator therebetween.

The electrode assembly 10 may be embedded, or housed or arranged, in the case 20. The case 20 forms an overall external appearance of the battery cell, and may be formed of a conductive metal such as aluminum, an aluminum alloy, or nickel-plated steel. In an embodiment, the case 20 may provide a space or opening that is open at an upper side and receives the electrode assembly 10. The case 20 includes a second side surface having a width in an x-axis direction and a first side surface having a width in a y-axis direction, and the first side surface may be formed to be longer than the second side surface.

The cap cover 30 may cover an open region of the case 20. The cap cover 30 may be coupled to the upper side of the case 20 to cover the open region of the case 20. The cap cover 30 in contact with the case 20 may be made of a conductive material.

The terminal 40 may pass through the cap cover 30 and be assembled to the cap cover 30. The terminal 40 may be connected to the electrode assembly 10. The terminal 40 passes through the cap cover 30, and has a lower portion that may be embedded, or housed or arranged, in the case 20 and in contact with the electrode assembly 10, and an upper portion that may protrude to the outside of the case 20. An electrode tab 18 connected to the electrode assembly 10 may be in contact with the terminal 40.

The housing 50 may accommodate the cases 20 arranged in a row. The housing 50 may be formed to have a space into which the cases 20 arranged in a row are insertable. In an embodiment, the housing 50 may be coupled to bottom and side surfaces of the cases 20 arranged in a row, thereby implementing modularization.

The thickness deformable portion 60 is formed in the housing 50 and is deformable due to a thickness difference when the case 20 expands. In an embodiment, the thickness difference may be implemented by connecting the disconnected housing 50 with the thickness deformable portion 60. In an embodiment, the thickness deformable portion 60 may be designed so that the housing 50 itself has different thicknesses. For example, the thickness deformable portion 60 may be processed or molded such that the housing 50 has different cross-sectional thicknesses in the x-axis direction. In an example, the cross-sectional thickness of the housing 50 in the x-axis direction may be uniformly or substantially uniformly maintained, and may be relatively reduced at the thickness deformable portion 60.

The housing 50 may include an end plate 51 and a side plate 52.

The end plate 51 may support the first side surfaces of the cases 20 arranged in a row. The cases 20 may be continuously arranged in the x-axis direction, and the first side surfaces of the cases 20 disposed at first and last positions may each be supported by the end plate 51.

The end plate 51 may include an end support portion 511 in close contact with the case 20 and end coupling portions 512 formed on the end support portion 511. The end support portion 511 has a length in the y-axis direction, and the end coupling portions 512 may be formed at both left and right side ends of the end support portion 511. The end support portion 511 may extend along the whole length of the housing in the y-axis direction.

The side plate 52 is coupled to the end plate 51, and may support the second side surfaces of the cases 20 arranged in a row. The side plate 52 has a length in the x-axis direction, and in an embodiment may maintain a coupled state with the end plate 51 by welding, for example. The side plate 52 may extend along the whole length of the housing in the x-axis direction.

The side plate 52 may include a side cover plate 521 and side coupling plates 522.

The side cover plate 521 may cover the second side surfaces of the cases 20. The side cover plate 521 may have a width corresponding to a sum of each length of the second side surfaces of the cases 20 continuously arranged in the x-axis direction. The side cover plate 521 may have a height corresponding to a height of the case 20 having a length in a z-axis direction.

The side coupling plates 522 may extend respectively from both, or opposite, ends of the side cover plate 521 in the x-axis direction. The side coupling plates 522 may each be coupled to the end plate 51. The side coupling plates 522 may each extend between 10% and 90% of the height of the side cover plate 521, preferably between 8% and 92% of the height of the side cover plate 521, more preferably between 5% and 95% of the height of the side cover plate 521. In an embodiment, the side coupling plates 522 may maintain a coupled state with the end coupling portion 512 by welding. The side coupling plate 522 may have one or two welding lines 523 formed in the z-axis direction. A part of the side coupling plate 522 may be in surface contact with and coupled to the end coupling portion 512.

A plurality of side cover plates 521 may be arranged to be spaced apart from each other, and the thickness deformable portion 60 may connect the spaced apart side cover plates 521. The thickness deformable portion 60 may overlap the spaced apart side cover plates 521, and the overlapping contact surface may form a thickness coupling line 69 along which the thickness deformable portion 60 and the side cover plate 521 are coupled to each other by welding.

A thickness of the thickness deformable portion 60 may be formed to be less than that of the side cover plate 521. Accordingly, when the case 20 expands, the thickness deformable portion 60 may be deformed, causing the side plate 52 to stretch in the x-axis direction.

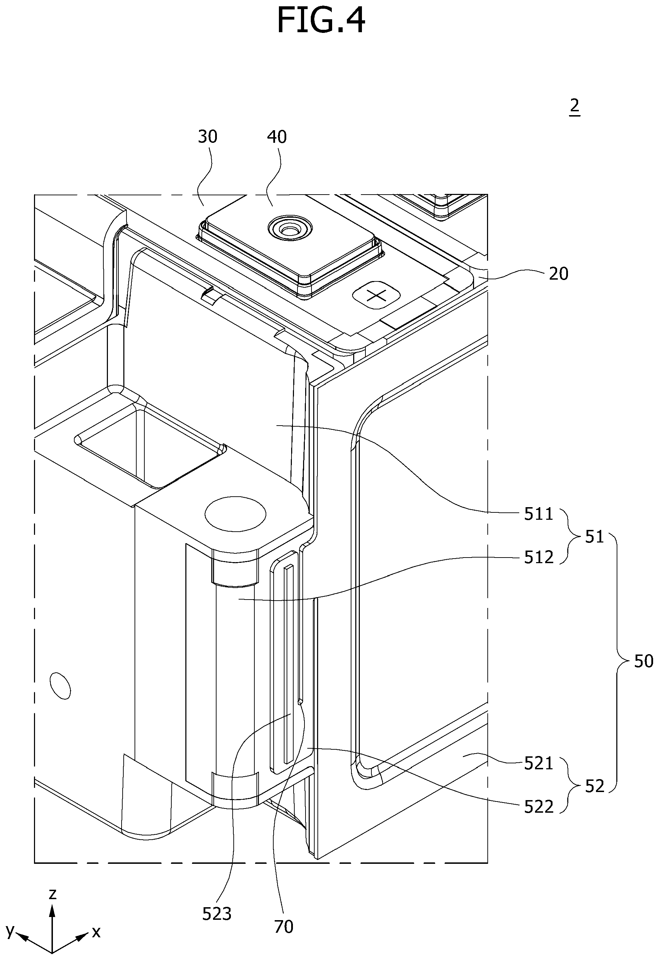

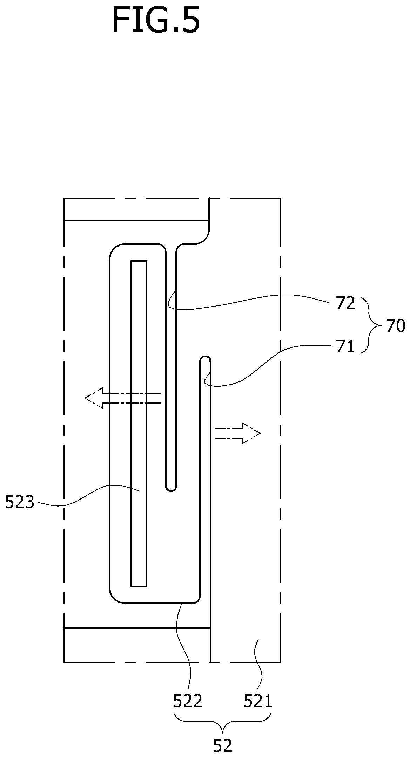

FIG. 4 is a perspective view schematically illustrating a battery module according to a second embodiment of the present invention, and FIG. 5 is a view schematically illustrating a cut deformable portion according to the second embodiment of the present invention. Referring to FIGS. 4 and 5, a battery module 2 according to the second embodiment of the present invention may include a case 20, a cap cover 30, a terminal 40, a housing 50, and a cut deformable portion 70.

An electrode assembly 10 may be embedded, or housed or arranged, in the case 20. The case 20 forms an overall external appearance of the battery cell, and may be formed of a conductive metal such as aluminum, an aluminum alloy, or nickel-plated steel. In an embodiment, the case 20 may provide a space or opening that is open at an upper side and receives the electrode assembly 10. The case 20 includes a second side surface having a width in the x-axis direction and a first side surface having a width in the y-axis direction, and the first side surface may be formed to be longer than the second side surface. Meanwhile, a specific configuration of the electrode assembly 10 is illustrated in FIG. 2, and thus, a detailed description thereof will be omitted.

The cap cover 30 may cover an open region of the case 20. The cap cover 30 is coupled to the upper side of the case 20 to cover the open region of the case 20. The cap cover 30 in contact with the case 20 may be made of a conductive material.

The terminal 40 may pass through the cap cover 30 and be assembled to the cap cover 30. The terminal 40 may be connected to the electrode assembly 10. The terminal 40 passes through the cap cover 30, and has a lower portion that may be embedded, or housed or arranged, in the case 20 and in contact with the electrode assembly 10, and an upper portion that may protrude to the outside of the case 20. An electrode tab 18 connected to the electrode assembly 10 may be in contact with the terminal 40.

The housing 50 may accommodate the cases 20 arranged in a row. The housing 50 may be formed to have a space or opening into which the cases 20 arranged in a row are insertable. In an embodiment, the housing 50 may be coupled to bottom and side surfaces of the cases 20 arranged in a row, thereby implementing modularization.

The cut deformable portion 70 is formed in the housing 50 and is deformable as a part of the housing 50 is cut when the case 20 expands. The cut deformable portion 70 may be formed as a hole formed by cutting a part of the housing 50 in the z-axis direction. The cut hole may be formed during a molding process of the housing 50 or may be formed by processing after completion of the molding of the housing 50. In an embodiment, a break line along which a part of the housing 50 in the z-axis direction is cuttable by an external force may be formed in the cut deformable portion 70. The cuttable break line may be formed by processing after completion of the molding of the housing 50.

The housing 50 may include an end plate 51 and a side plate 52.

The end plate 51 may support the first side surfaces of the cases 20 arranged in a row. The cases 20 may be continuously arranged in the x-axis direction, and the first side surfaces of the cases 20 disposed at first and last positions may each be supported by the end plate 51.

The end plate 51 may include an end support portion 511 in close contact with the case 20 and end coupling portions 512 formed on the end support portion 511. The end support portion 511 has a length in the y-axis direction, and the end coupling portions 512 may be formed at both left and right side ends of the end support portion 511.

The side plate 52 is coupled to the end plate 51, and may support the second side surfaces of the cases 20 arranged in a row. The side plate 52 has a length in the x-axis direction, and may maintain a coupled state with the end plate 51 by welding.

The side plate 52 may include a side cover plate 521 and side coupling plates 522.

The side cover plate 521 may cover the second side surfaces of the cases 20. The side cover plate 521 may have a width corresponding to a sum of each length of the second side surfaces of the cases 20 continuously arranged in the x-axis direction. The side cover plate 521 may have a height corresponding to a height of the case 20 having a length in the z-axis direction.

The side coupling plates 522 may extend respectively from both, or opposite ends of the side cover plate 521 in the x-axis direction. The side coupling plates 522 may be coupled to the end plate 51. The side coupling plates 522 may each extend between 10% and 90% of the height of the side cover plate 521. The side coupling plates 522 may maintain a coupled state with the end coupling portion 512 by welding. The side coupling plate 522 may have one or two welding lines 523 formed in the z-axis direction. A part of the side coupling plate 522 may be in surface contact with and coupled to the end coupling portion 512.

The cut deformable portion 70 may include a first cutting line 71 and a second cutting line 72.

The first cutting line 71 extends upward from a lower end portion of the side coupling plate 522 to cut a part of the side coupling plate 522. The first cutting line 71 may be disposed between the side cover plate 521 and the welding line 523. The first cutting line 71 may be a hole or a break line generated in the z-axis direction. A length of the first cutting line 71 may be 20% to 80% of a height of the side coupling plate 522, preferably 22% to 82% of a height of the side coupling plate 522, more preferably 25% to 85% of a height of the side coupling plate 522.

The second cutting line 72 may extend downward from an upper end portion of the side coupling plate 522 to cut a part of the side coupling plate 522. The second cutting line 72 may be disposed between the first cutting line 71 and the welding line 523. The second cutting line 72 may be a hole or break line generated in the z-axis direction. A length of the second cutting line 72 may be 20% to 80% of the height of the side coupling plate 522, preferably 22% to 82% of a height of the side coupling plate 522, more preferably 25% to 85% of a height of the side coupling plate 522.

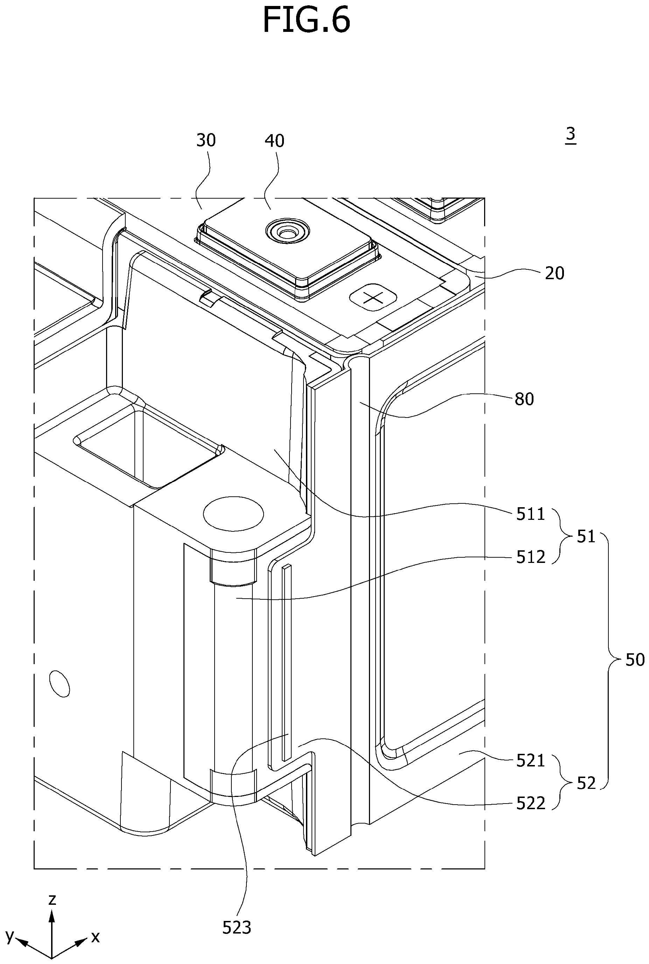

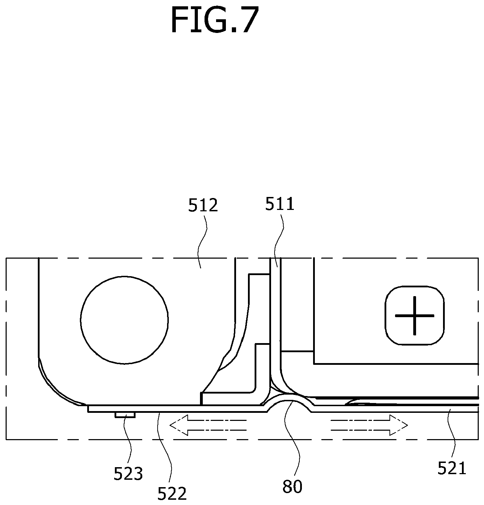

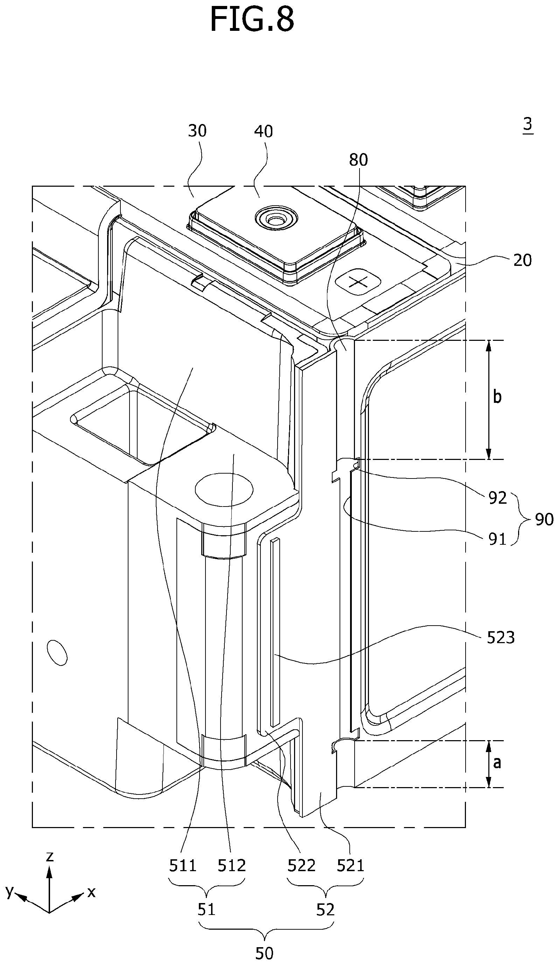

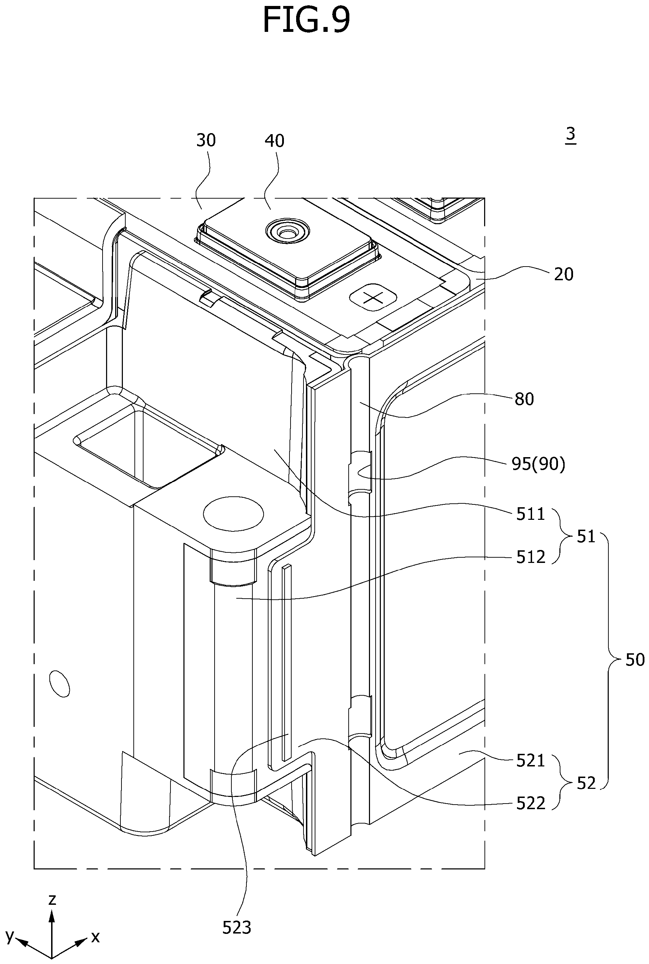

FIG. 6 is a perspective view schematically illustrating a battery module according to a third embodiment of the present invention, and FIG. 7 is a view schematically illustrating a curved deformable portion according to the third embodiment of the present invention. FIG. 8 is a view illustrating a state in which a stress distribution portion according to a first embodiment is formed in the curved deformable portion of FIG. 7, and FIG. 9 is a view illustrating a state in which a stress distribution portion according to a second embodiment is formed in the curved deformable portion of FIG. 7. Referring to FIGS. 6 to 9, a battery module 3 according to the third embodiment of the present invention may include a case 20, a cap cover 30, a terminal 40, a housing 50, and a curved deformable portion 80.

An electrode assembly 10 may be embedded, or housed or arranged, in the case 20. The case 20 forms an overall external appearance of the battery cell, and may be formed of a conductive metal such as aluminum, an aluminum alloy, or nickel-plated steel. In an embodiment, the case 20 may provide a space or opening that is open at an upper side and receives the electrode assembly 10. The case 20 includes a second side surface having a width in the x-axis direction and a first side surface having a width in the y-axis direction, and the first side surface may be formed to be longer than the second side surface. Meanwhile, a specific configuration of the electrode assembly 10 is illustrated in FIG. 2, and thus, a detailed description thereof will be omitted.

The cap cover 30 may cover an open region of the case 20. The cap cover 30 is coupled to the upper side of the case 20 to cover the open region of the case 20. The cap cover 30 in contact with the case 20 may be made of a conductive material.

The terminal 40 may pass through the cap cover 30 and be assembled to the cap cover 30. The terminal 40 may be connected to the electrode assembly 10. The terminal 40 passes through the cap cover 30, and has a lower portion that may be embedded, or housed or arranged, in the case 20 and in contact with the electrode assembly 10, and an upper portion that may protrude to the outside of the case 20. An electrode tab 18 connected to the electrode assembly 10 may be in contact with the terminal 40.

The housing 50 may accommodate the cases 20 arranged in a row. The housing 50 may be formed to have a space or opening into which the cases 20 arranged in a row are insertable. In an embodiment, the housing 50 may be coupled to bottom and side surfaces of the cases 20 arranged in a row, thereby implementing modularization.

The curved deformable portion 80 is formed in the housing 50 and is deformable due to a curved shape when the case 20 expands. The curved deformable portion 80 may have a shape in which a part of the housing 50 protrudes or is recessed in the z-axis direction. The curved deformable portion 80 may be formed during a molding process of the housing 50 or may be formed by processing after completion of the molding of the housing 50.

The housing 50 may include an end plate 51 and a side plate 52.

The end plate 51 may support the first side surfaces of the cases 20 arranged in a row. The cases 20 may be continuously arranged in the x-axis direction, and the first side surfaces of the cases 20 disposed at first and last positions may each be supported by the end plate 51.

The end plate 51 may include an end support portion 511 in close contact with the case 20 and end coupling portions 512 formed on the end support portion 511. The end support portion 511 has a length in the y-axis direction, and the end coupling portions 512 may be formed at both left and right side ends of the end support portion 511.

The side plate 52 is coupled to the end plate 51, and may support the second side surfaces of the cases 20 arranged in a row. The side plate 52 has a length in the x-axis direction, and may maintain a coupled state with the end plate 51 by welding.

The side plate 52 may include a side cover plate 521 and side coupling plates 522.

The side cover plate 521 may cover the second side surfaces of the cases 20. The side cover plate 521 may have a width corresponding to a sum of each length of the second side surfaces of the cases 20 continuously arranged in the x-axis direction. The side cover plate 521 may have a height corresponding to a height of the case 20 having a length in the z-axis direction.

The side coupling plates 522 may extend respectively from both, or opposite ends of the side cover plate 521 in the x-axis direction. The side coupling plates 522 may be coupled to the end plate 51. The side coupling plates 522 may each extend between 10% and 90% of the height of the side cover plate 521. The side coupling plates 522 may maintain a coupled state with the end coupling portion 512 by welding. The side coupling plate 522 may have one or two welding lines 523 formed in the z-axis direction. A part of the side coupling plate 522 may be in surface contact with and coupled to the end coupling portion 512.

The curved deformable portion 80 may be formed in the side cover plate 521. The curved deformable portion 80 may be formed to have a length in the z-axis direction, that is, extending from a lower end portion to an upper end portion of the side cover plate 521. A plurality of curved deformable portions 80 may be arranged to be spaced apart from each other in the x-axis direction. In an embodiment, the curved deformable portion 80 may be disposed on the side coupling plate 522 formed between the welding line 523 and the side cover plate 521.

The battery module 3 according to the third embodiment of the present invention may further include a stress distribution portion 90. The stress distribution portion 90 may be formed on a part of the curved deformable portion 80 and may distribute stress.

The stress distribution portion 90 according to the first embodiment may include a first hole 91 and second holes 92. The first hole 91 may be processed to have a length in a first direction of the curved deformable portion 80. The first direction may refer to the z-axis direction in FIG. 8. The second holes 92 may be processed at upper and lower ends of the first hole 91 so as to have a length in a second direction. The second direction may refer to the x-axis direction in FIG. 8. A low point of the first hole 91 may be formed higher than a lower end portion of the curved deformable portion 80, and a high point of the first hole 91 may be formed lower than an upper end portion of the curved deformable portion 80. The second holes 92 may extend in the second direction at the low and high points of the first hole 91. Depending on the design situation, when the deformation of a lower portion of the side plate 52 is greater than the deformation of an upper portion thereof, a distance a from the lower end portion of the side cover plate 521 to the low point of the first hole 91 may be formed to be less than a distance b from the upper end portion of the side cover plate 521 to the high point of the first hole 91. The first hole 91 may be designed to correspond to a width of the curved deformable portion 80 and may be formed inside the curved deformable portion 80. The second hole 92 may be formed to extend to the side cover plate 521.

The stress distribution portion 90 according to the second embodiment may include a distribution hole 95. One or more distribution holes 95 may be processed to be spaced apart from each other in a vertical length direction of the curved deformable portion 80. The distribution hole 95 may be designed to correspond to the width of the curved deformable portion 80 and may be formed inside the curved deformable portion 80.

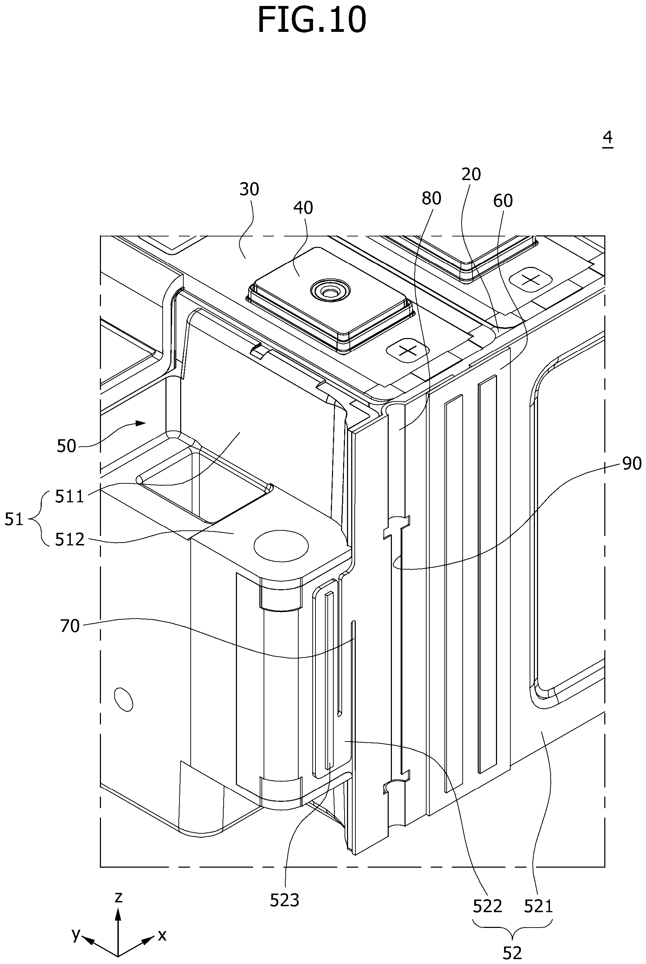

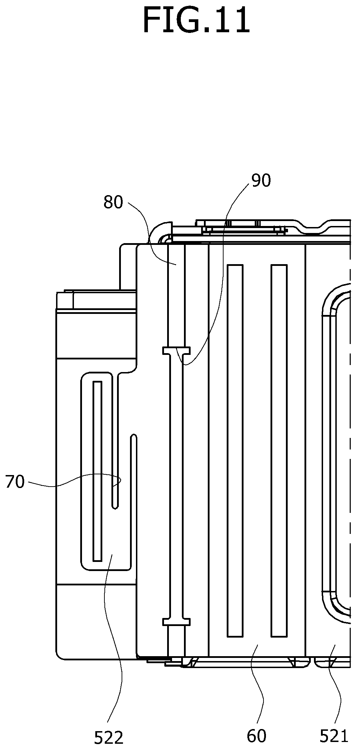

FIG. 10 is a perspective view schematically illustrating a battery module according to a fourth embodiment of the present invention, and FIG. 11 is a view schematically illustrating a state in which a thickness deformable portion, a cut deformable portion, and a curved deformable portion according to the fourth embodiment of the present invention are simultaneously implemented. Referring to FIGS. 10 and 11, a battery module 4 according to the fourth embodiment of the present invention includes a case 20, a cap cover 30, a terminal 40, and a housing 50. In an embodiment, at least two of a thickness deformable portion 60, a cut deformable portion 70, and a curved deformable portion 80 may be provided.

An electrode assembly 10 may be embedded, or housed or arranged, in the case 20. The case 20 forms an overall external appearance of the battery cell, and may be formed of a conductive metal such as aluminum, an aluminum alloy, or nickel-plated steel. In an embodiment, the case 20 may provide a space or opening that is open at an upper side and receives the electrode assembly 10. The case 20 includes a second side surface having a width in the x-axis direction and a first side surface having a width in the y-axis direction, and the first side surface may be formed to be longer than the second side surface. Meanwhile, a specific configuration of the electrode assembly 10 is illustrated in FIG. 2, and thus, a detailed description thereof will be omitted.

The cap cover 30 may cover an open region of the case 20. The cap cover 30 is coupled to the upper side of the case 20 to cover the open region of the case 20. The cap cover 30 in contact with the case 20 may be made of a conductive material.

The terminal 40 may pass through the cap cover 30 and be assembled to the cap cover 30. The terminal 40 may be connected to the electrode assembly 10. The terminal 40 passes through the cap cover 30, and has a lower portion that may be embedded, or housed or arranged, in the case 20 and in contact with the electrode assembly 10, and an upper portion that may protrude to the outside of the case 20. An electrode tab 18 connected to the electrode assembly 10 may be in contact with the terminal 40.

The housing 50 may accommodate the cases 20 arranged in a row. The housing 50 may be formed to have a space or opening into which the cases 20 arranged in a row are insertable. In an embodiment, the housing 50 may be coupled to bottom and side surfaces of the cases 20 arranged in a row, thereby implementing modularization.

The housing 50 may include an end plate 51 and a side plate 52.

The end plate 51 may support the first side surfaces of the cases 20 arranged in a row. The cases 20 may be continuously arranged in the x-axis direction, and the first side surfaces of the cases 20 disposed at first and last positions may each be supported by the end plate 51.

The end plate 51 may include an end support portion 511 in close contact with the case 20 and end coupling portions 512 formed on the end support portion 511. The end support portion 511 has a length in the y-axis direction, and the end coupling portions 512 may be formed at both left and right side ends of the end support portion 511.

The side plate 52 is coupled to the end plate 51, and may support the second side surfaces of the cases 20 arranged in a row. The side plate 52 has a length in the x-axis direction, and may maintain a coupled state with the end plate 51 by welding.

The side plate 52 may include a side cover plate 521 and side coupling plates 522.

The side cover plate 521 may cover the second side surfaces of the cases 20. The side cover plate 521 may have a width corresponding to a sum of each length of the second side surfaces of the cases 20 continuously arranged in the x-axis direction. The side cover plate 521 may have a height corresponding to a height of the case 20 having a length in the z-axis direction.

The side coupling plates 522 may extend respectively from both, or opposite ends of the side cover plate 521 in the x-axis direction. The side coupling plates 522 may be coupled to the end plate 51. The side coupling plates 522 may each extend between 10% and 90% of the height of the side cover plate 521. The side coupling plates 522 may maintain a coupled state with the end coupling portion 512 by welding. The side coupling plate 522 may have one or two welding lines 523 formed in the z-axis direction. A part of the side coupling plate 522 may be in surface contact with and coupled to the end coupling portion 512.

Meanwhile, the thickness deformable portion 60 and the curved deformable portion 80 may be formed on the side cover plate 521, and the cut deformable portion 70 may be formed on the side coupling plate 522. In an embodiment, a stress distribution portion 90 formed in a part of the curved deformable portion 80 may distribute stress.

A specific shape or feature of the thickness deformable portion 60 has been described in the battery module 1 according to the first embodiment of the present invention. A specific shape or feature of the cut deformable portion 70 has been described in the battery module 2 according to the second embodiment of the present invention. A specific shape or feature of each of the curved deformable portion 80 and the stress distribution portion 90 has been described in the battery module 3 according to the third embodiment of the present invention. The above-described thickness deformable portion 60, cut deformable portion 70, and curved deformable portion 80 may be selectively applied to the battery module 4 according to the fourth embodiment of the present invention.

In a battery module according to a first embodiment of the present invention, a thickness deformable portion is connected to housings spaced apart from each other, and when cases continuously arranged expand, a length of the housing can be increased due to the thickness deformable portion

In a battery module according to a second embodiment of the present invention, a cut deformable portion is formed in a housing, and when cases continuously arranged expand, a length of the housing can be increased as the cut deformable portion is cut and spread.

In a battery module according to a third embodiment of the present invention, a curved deformable portion is formed in a housing, and when cases continuously arranged expand, a length of the housing can be increased due to the curved deformable portion

In a battery module according to a fourth embodiment of the present invention, at least two of a thickness deformable portion, a cut deformable portion, and a curved deformable portion are formed in a housing, and when cases continuously arranged expand, a length of the housing can be increased. Thus, the first, second and third embodiments can be combined to one or more new embodiments.

According to another aspect of the present invention, a battery pack manufactured by using a battery having an improved structure, and a vehicle including the same can be provided.

While the present disclosure has been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

## Claims

1. A battery module (1, 2, 3, 4) comprising:
a case (20) in which one or more electrode assemblies (10) each comprising a positive electrode (11) and a negative electrode (12) are embedded;
a cap cover (30) configured to cover an opening of the case (20);
a terminal (40) assembled to the cap cover (30) through the cap cover (30) and connected to the one or more electrode assemblies (10);
a housing (50) configured to accommodate the cases (20) arranged in a row; and
a thickness deformable portion (60) that is formed in the housing (50) and deformable due to a thickness difference when the case (20) expands.

2. A battery module (1, 2, 3, 4) comprising:
a case (20) in which one or more electrode assemblies each including a positive electrode (11) and a negative electrode (12) are embedded;
a cap cover (30) configured to cover an open region of the case (20);
a terminal (40) assembled to the cap cover (30) through the cap cover (30) and connected to the electrode assembly;
a housing (50) configured to accommodate the cases (20) arranged in a row; and
a cut deformable portion (70) that is formed in the housing (50) and is deformable as a part of the housing (50) is cut when the case (20) expands.

3. A battery module (1, 2, 3, 4) comprising:
a case (20) in which one or more electrode assemblies each including a positive electrode (11) and a negative electrode (12) are embedded;
a cap cover (30) configured to cover an open region of the case (20);
a terminal (40) assembled to the cap cover (30) through the cap cover (30) and connected to the electrode assembly;
a housing (50) configured to accommodate the cases (20) arranged in a row; and
a curved deformable portion (80) that is formed in the housing (50) and is deformable due to a curved shape when the case (20) expands.

4. A battery module (1, 2, 3, 4) comprising:
a case (20) in which one or more electrode assemblies each including a positive electrode (11) and a negative electrode (12) are embedded;
a cap cover (30) configured to cover an open region of the case (20);
a terminal (40) assembled to the cap cover (30) through the cap cover (30) and connected to the electrode assembly; and
a housing (50) configured to accommodate the cases (20) arranged in a row,
wherein at least two of a thickness deformable portion (60) that is formed in the housing (50) and is deformable due to a thickness difference when the case (20) expands, a cut deformable portion (70) that is formed in the housing (50) and is deformable as a part of the housing (50) is cut when the case (20) expands, and a curved deformable portion (80) that is formed in the housing (50) and is deformable due to a curved shape when the case (20) expands are provided.

5. The battery module (1, 2, 3, 4) as claimed in any one of claims 1, 2, 3, or 4, wherein the housing (50) comprises:
an end plate (51) configured to support first side surfaces of the cases (20) arranged in a row; and
a side plate (52) coupled to the end plate (51) and configured to support second side surfaces of the cases (20) arranged in the row.

6. The battery module (1, 2, 3, 4) as claimed in claim 5, wherein the side plate (52) comprises:
a side cover plate (521) configured to cover the second side surfaces of the cases (20); and
a side coupling plate (522) extending from the side cover plate (521) and coupled to the end plate (51).

7. The battery module (1, 2, 3, 4) as claimed in claim 6, when depending on claims 1 or 4 wherein a plurality of side cover plates (521) are arranged to be spaced apart from each other, and
the thickness deformable portion (60) connects the side cover plates (521) spaced apart from each other.

8. The battery module as claimed in claims 1 or 4, or claims 5 to 7, when depending on claims 1 or 4, wherein a thickness of the thickness deformable portion is less than a thickness of the side cover plate (521).

9. The battery module (1, 2, 3, 4) as claimed in claim 6 when depending on claims 2 or 4, wherein the cut deformable portion (70) comprises:
a first cutting line (71) extending upward from a lower end portion of the side coupling plate (522) to cut a part of the side coupling plate (522); and
a second cutting line (72) extending downward from an upper end portion of the side coupling plate (522) to cut a part of the side coupling plate (522).

10. The battery module as claimed in claim 9, wherein a length of each of the first cutting line and the second cutting line is 20% to 80% of a height of the side coupling plate.

11. The battery module as claimed in claim 6, when depending on claims 3 or 4, wherein the curved deformable portion is arranged on the side cover plate.

12. The battery module (1, 2, 3, 4) as claimed in any one of claim 3, 4 or claims 5-6 when depending on claims 3 or 4, or claim 11, further comprising a stress distribution portion formed on a part of the curved deformable portion (80) and configured to distribute stress.

13. The battery module (1, 2, 3, 4) as claimed in claim 12, wherein the stress distribution portion comprises:
a first hole (91) processed to have a length in a first direction of the curved deformable portion (80); and
a second hole (92) processed at the first hole (91) so as to have a length in a second direction.

14. The battery module (1, 2, 3, 4) as claimed in claim 13, wherein the stress distribution portion comprises one or more distribution holes (95) processed to be spaced apart from each other in a vertical length direction of the curved deformable portion (80).
